# EUROPEAN PATENT APPLICATION

(11) **EP 3 961 992 A1**
(43) Date of publication of application: **02.03.2022**
(21) Application number: 20794089.1
(22) Date of filing: 10.03.2020
(51) Int. Cl.: H04L 12/28, H04L 29/08

(54) **NETWORK EQUIPMENT**

(30) Priority: 24.04.2019 JP 2019083292
(71) Applicant: OMRON Corporation, Shiokoji-dori, Shimogyo-Ku Kyoto-shi Kyoto 600-8530 (JP)
(72) Inventor: TAKEDA, Takashi, Kyoto-shi, Kyoto 600-8530 (JP)
(74) Representative: Becker, Eberhard
(86) International application number: PCT/JP2020/010223
(87) International publication number: WO 2020/217754

(57) **Abstract**

A control portion (10) of a network equipment (1) attempts, when connected to other equipment, connection by using a predetermined communication parameter through communication portions (11, 12), and in a case that the communication is not established, the control portion (10) executes negotiation and establishes communication with the other equipment by using an agreed communication parameter.

## Description

### BACKGROUND

### Technical Field

The present invention relates to a network equipment.

### Related Art

In the field of factory automation (FA), control of various types of devices that share work processes is performed. In order to operate various controllers, remote I/O, and manufacturing devices which are used in work in a certain region such as factory facilities or the like in cooperation, an industrial network system, which is also referred to as a field network, that connects these devices is constructed. EtherCAT (registered trademark) is also one of the forms of this industrial network system.

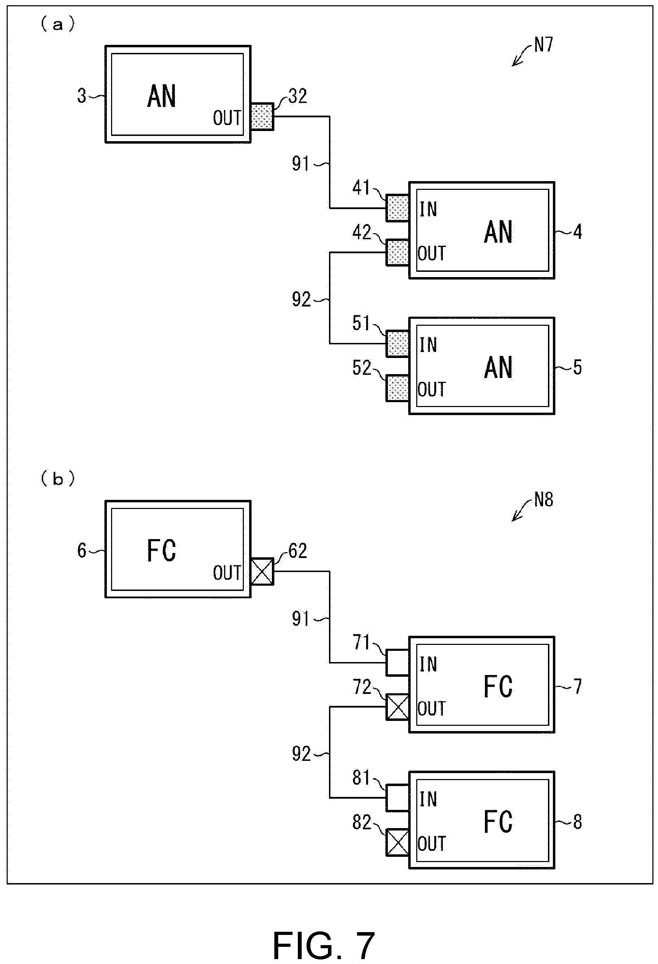

In a network system N7 shown in (a) of FIG. 7, two slave devices are sequentially and vertically connected to a master device. When the network equipments are connected to a network, for example, when the power is turned on, these network equipments execute auto-negotiation for deciding a communication parameter by which communication with other equipment connected by a communication cable can be performed.

In (a) of FIG. 7, the master device is an auto-negotiation compatible unit 3. An OUT-side communication portion 32 of the auto-negotiation compatible unit 3 and an IN-side communication portion 41 of an auto-negotiation compatible unit 4, which is a slave device, are connected by a communication cable 91. An OUT-side communication portion 42 of the auto-negotiation compatible unit 4 and an IN-side communication portion 51 of an auto-negotiation compatible unit 5, which is a slave device, are connected by a communication cable 92. In this example, the communication cable is not connected to an OUT-side communication portion 52 of the auto-negotiation compatible unit 5.

Here, the IN-side refers to the upstream side of the network system, that is, the side close to the master device. The OUT-side refers to the downstream side of the network system, that is, the side far from the master device.

The network system N7 has a problem that it takes time to start up because, for example, when the power of all the network equipments is turned on to start up the production system, each equipment executes auto-negotiation. However, there is also a case where the quickness of start-up is particularly required in the industrial network system used at a production site.

Therefore, an industrial network system is also used which uses fast connect units and in which each network equipment performs communication by using a communication parameter that is uniquely decided in advance and thereby the connection to the network is speeded up without the need of negotiation. A network system N8 shown in (b) of FIG. 7 is such an example.

In (b) of FIG. 7, the master device is a fast connect unit 6. An OUT-side communication portion 62 of the fast connect unit 6 and an IN-side communication portion 71 of a fast connect unit 7, which is a slave device, are connected by a communication cable 91. An OUT-side communication portion 72 of the fast connect unit 7 and an IN-side communication portion 81 of a fast connect unit 8, which is a slave device, are connected by a communication cable 92. In this example, the communication cable is not connected to an OUT-side communication portion 82 of the fast connect unit 8.

### [Literature of related art]

### [Patent literature]

Patent literature 1: Japanese Patent Laid-Open No. 2016-195329

### SUMMARY

### [Problems to be Solved]

However, the communication cannot be established between the auto-negotiation compatible unit and the fast connect unit because the operations at the time of the network connection are different. The network equipment in the industrial network system is actually an apparatus for production, and there is a demand to enable flexible apparatus replacement when products to be produced are switched and the like. However, even if an apparatus which is a fast connect unit is to be connected to the network system N7 configured by auto-negotiation compatible units, communication cannot be performed. Conversely, even if an apparatus which is an auto-negotiation compatible unit is to be connected to the network system N8 configured by fast connect units, communication cannot be performed.

The present invention is accomplished in view of the above problems, and the objective is to realize a network equipment that can be connected to an equipment that sets a communication parameter by negotiation and to an equipment that performs communication by using a predetermined communication parameter only.

### [Means to Solve Problems]

The present invention adopts the following configuration for solving the above-described problems.

A network equipment according to an aspect of the present invention is used in a network system in which a master device and slave devices are connected by a cable, and the network equipment includes a communication portion that transmits/receives data to/from other equipment, and a control portion that controls the communication portion. The network equipment has a configuration in which the control portion attempts, when the own equipment is connected to other equipment in the network system, connection to the other equipment by using a predetermined communication parameter through the communication portion, and in a case that the communication with the other equipment by using the predetermined communication parameter is not established, the control portion executes negotiation for deciding the communication parameter with the other equipment through the communication portion and establishes the communication with the other equipment by using an agreed communication parameter.

### [Effect]

According to the above configuration, a network equipment can be realized which can be connected to an equipment that sets a communication parameter by negotiation and to an equipment that performs communication by using a predetermined communication parameter only.

### BRIEF DESCRIPTION OF THE DRAWINGS

FIG. 1 is a schematic configuration diagram showing a network equipment according to Embodiment 1 of the present invention.
FIG. 2 is a flowchart showing an operation of the network equipment according to Embodiment 1 of the present invention.
FIG. 3 is a diagram showing an example of Example 1 of the present invention, wherein (a) shows a state immediately after the network equipment is connected, and (b) shows a state after communication is established.
FIG. 4 is a diagram showing an example of Example 2 of the present invention.
FIG. 5 is a diagram showing an example of Example 3 of the present invention.
FIG. 6 is a diagram showing an example of Example 4 of the present invention.
(a) of FIG. 7 is a diagram showing a network system of the prior art configured by auto-negotiation compatible units, and (b) is a diagram showing a network system of the prior art configured by fast connect units.

### DESCRIPTION OF THE EMBODIMENTS

### [Embodiment 1]

Hereinafter, an embodiment according to an aspect of the present invention (hereinafter, also referred to as "the embodiment") is described with reference to the drawings.

### §1 Application example

First, an example of a situation in which the present invention is applied is described. The network equipment of the embodiment is a network equipment used in a network system in which a master device and slave devices are connected by a communication cable. The network equipment of the embodiment includes a communication portion that transmits/receives data to/from other equipment, and a control portion that controls the communication portion.

When the own equipment is connected to other equipment in the network system, the control portion attempts connection to the other equipment by using a predetermined communication parameter through the communication portion. In a case that the communication with the other equipment is not established by using the predetermined communication parameter, the control portion executes negotiation for deciding the communication parameter with the other equipment through the communication portion. Thereby, the communication with the other equipment is established by using the communication parameter agreed with the other equipment.

In this way, when connected to the other equipment in the network system, the network equipment of the embodiment first attempts the connection to the other equipment by using a predetermined communication parameter. Here, the predetermined communication parameter is a communication parameter used by other equipment that performs communication by using the uniquely decided communication parameter only. Therefore, if the other equipment is an equipment that performs communication by using the predetermined communication parameter only, the communication with the other equipment can be quickly established.

On the other hand, if the other equipment is an equipment that executes negotiation to set the communication parameter, communication cannot be established in the above trial. Then, the negotiation for deciding the communication parameter with the other equipment is executed next, and the communication parameter can agree with the other equipment here. Therefore, the communication with the other equipment is established.

Therefore, according to the embodiment, the network equipment can be realized which can be connected to an equipment that sets the communication parameter by negotiation and to an equipment that performs communication by using a predetermined communication parameter only.

### §2 Configuration example

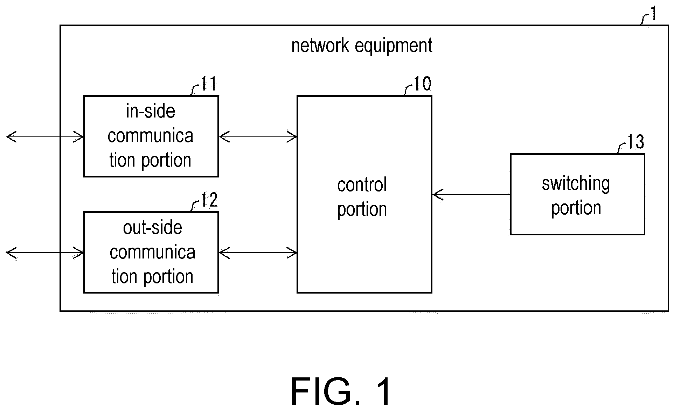

FIG. 1 is a diagram showing an example of a configuration of a network equipment 1 of the embodiment. The network equipment 1 includes a control portion 10, an IN-side communication portion 11 (a communication portion, a first communication portion), an OUT-side communication portion 12 (a communication portion, a second communication portion), and a switching portion 13.

The IN-side communication portion 11 is a functional block that communicates with other equipment on the IN-side of the network system. The IN-side communication portion 11 can communicate with other equipment by being connected to an OUT-side communication portion of the other equipment by a communication cable. The OUT-side communication portion 12 is a functional block that communicates with other equipment on the OUT-side of the network system. The OUT-side communication portion 12 can communicate with the other equipment by being connected to an IN-side communication portion of the other equipment by a communication cable.

The switching portion 13 is a functional block having connection mode information of each of the IN-side communication portion 11 and the OUT-side communication portion 12. The connection mode information is any one of non-fixation, specified communication parameter fixation (a first connection mode), and auto-negotiation fixation (a second connection mode). The non-fixation is a connection mode for executing the operation of the network equipment of the present invention described in the above application example. The switching portion 13 can be configured by DIP switches for each of the IN-side communication portion 11 and the OUT-side communication portion 12 as an example.

The specified communication parameter is a connection mode for canceling the operation described in the above application example and operating as an equipment (for example, a fast connect unit of the prior art) that performs communication by using a predetermined communication parameter only. The auto-negotiation fixation is a connection mode for canceling the operation described in the above application example and operating as negotiation (for example, an auto-negotiation compatible unit of the prior art) for deciding the communication parameter with other equipment.

The control portion 10 is a functional block that controls the IN-side communication portion 11 and the OUT-side communication portion 12. In addition, the control portion 10 can acquire the connection mode information of each of the IN-side communication portion 11 and the OUT-side communication portion 12 from the switching portion 13.

The network equipment 1 executes a characteristic operation when connected to the network system, that is, when connected to the other equipment in the network system through the IN-side communication portion 11 or the OUT-side communication portion 12.

Here, the connection to the network system may be a connection of, for example, the IN-side communication portion 11 to the OUT-side communication portion of the other working equipment on the network system by a communication cable in a state that the power of the network equipment 1 is on. Alternatively, the connection to the network system may be a case that the communication cable is already connected to the other working equipment and the power of the network equipment 1 is turned from off to on. In addition, the connection to the network system may also be a case that the power of all the network equipments in the network system configured by the plurality of network equipments including the network equipment 1 and connected to each other by the communication cable is turned on at substantially the same time.

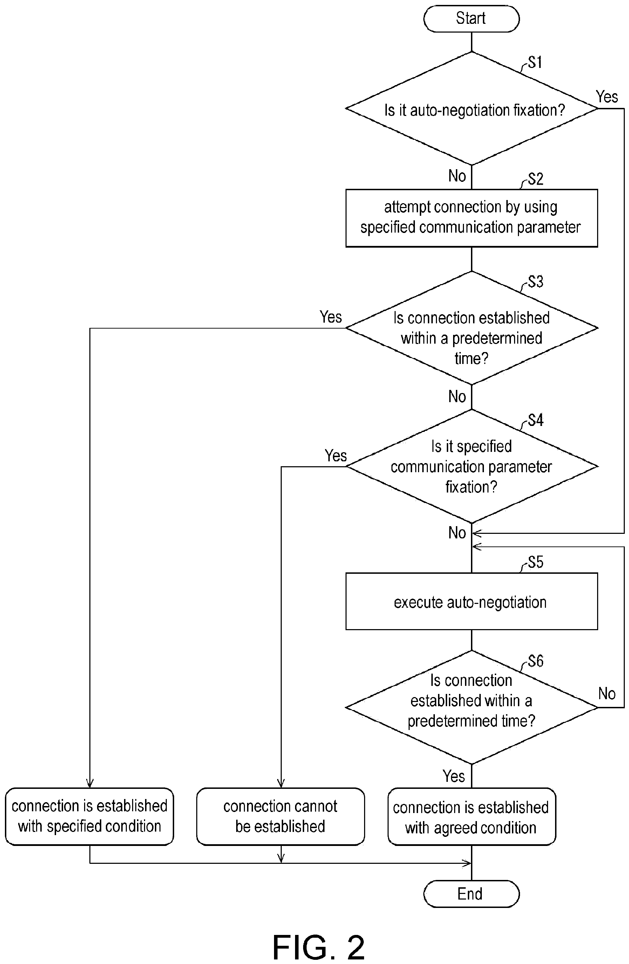

FIG. 2 is a flowchart showing a characteristic operation of the network equipment 1. The network equipment 1 executes a flow of the following Steps S1 to S6 when connected to the network. Here, as an example, a case that a new connection to the network is performed through the IN-side communication portion 11 is described.

First, in Step S1, the control portion 10 acquires the connection mode information of the IN-side communication portion 11 from the switching portion 13 and determines whether the connection mode of the IN-side communication portion 11 is the auto-negotiation fixation. If it is determined that the connection mode is the auto-negotiation fixation (YES in S1), the process proceeds to Step S5, and otherwise (NO in S1), the process proceeds to Step S2 (Step S1).

In Step S2, the control portion 10 attempts the communication with the other equipment through the IN-side communication portion 11. At this time, the communication parameter is a specified condition used by the equipment that performs communication by using a predetermined communication parameter only. As an example, when the communication parameter is a communication parameter used by the fast connect unit, the port type is fixed to a medium dependent interface (MDI) (in the case of the IN-side communication portion 11), the communication speed is fixed to 100 MHz, and the full-duplex/half-duplex type is fixed to full-duplex (Step S2).

Subsequently, in Step S3, the control portion 10 determines whether or not the connection with the other equipment is established within a predetermined time, that is, whether or not the communication with the other equipment can be performed under the above-described predetermined communication parameter. The predetermined time here can be, for example, a time in a range of 1 to 30 seconds. If it is determined that the connection with the other equipment is established within a predetermined time (YES in S3), the connection is established by using the predetermined communication parameter and the flow ends. Otherwise (NO in S3), the process proceeds to Step S4 (Step S3).

In Step S4, the control portion 10 acquires the connection mode information of the IN-side communication portion 11 from the switching portion 13 and determines whether or not the connection mode of the IN-side communication portion 11 is the specified communication parameter fixation. If it is determined that the connection mode is the specified communication parameter fixation (YES in S4), the connection with the other equipment is not established and the flow ends. Otherwise (NO in S4), the process proceeds to Step S5 (Step S4).

In Step S5, the control portion 10 executes auto-negotiation for deciding the communication parameter by which the communication with the other equipment can be performed through the IN-side communication portion 11. The communication parameter to be decided is at least any one of a medium dependent interface (MDI) or medium dependent interface crossover (MDI-X) port type, the communication speed, and the full-duplex/half-duplex type (Step S5).

Subsequently, in Step S6, the control portion 10 determines whether or not the connection with the other equipment is established within a predetermined time, that is, whether or not the communication parameter condition under which the communication with the other equipment can be performed can be agreed by auto-negotiation, and the communication can be performed by using the communication parameter. The predetermined time here can be, for example, a time in a range of 1 to 30 seconds. If it is determined that the connection with the other equipment is established within a predetermined time (YES in S6), the connection is established by using the agreed communication parameter and the flow ends. Otherwise (NO in S6), the process proceeds to Step S5 (Step S6).

In the above flow, when the connection to the other equipment is performed through the OUT-side communication portion 12 instead of the IN-side communication portion 11, the port type in the predetermined communication parameter in Step S2 is set to MDI-X. In addition, the connection mode information acquired by the control portion 10 in Step S1 and Step S4 is for the OUT-side communication portion 12, and the other parts are the same.

### §3 Operation example

Examples served as operation examples of the network equipment 1 according to Embodiment 1 are shown below. In the following description, the network equipment according to the present invention is used in a non-fixation connection mode that exerts the function according to the present invention.

### (Example 1)

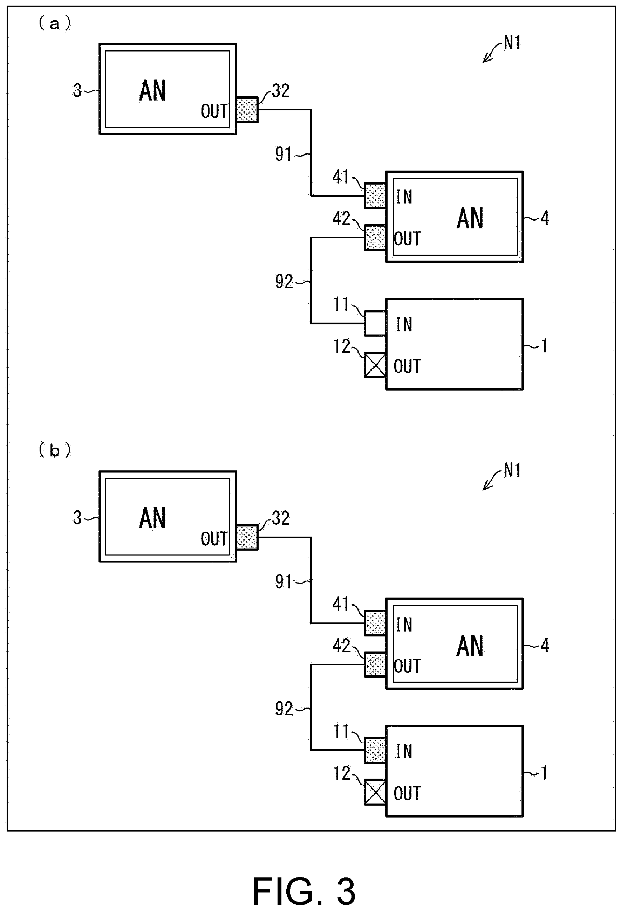

FIG. 3 is a diagram for describing the operation of the network equipment 1 in Embodiment 1. Example 1 is an example in which a network system N1 is constructed, the network system N1 being obtained by replacing an auto-negotiation compatible unit 5 which is a slave equipment with the network equipment 1 according to Embodiment 1 in a network system N7 of the prior art shown in (a) of FIG. 7.

The IN-side communication portion 11 of the network equipment 1 is connected to the OUT-side communication portion 42 of the auto-negotiation compatible unit 4 through the communication cable 92 by the user. Then, first, the network equipment 1 attempts the communication with the auto-negotiation compatible unit 4 by using a predetermined communication parameter which is a communication parameter used by the fast connect unit (Step S2 above, (a) of FIG. 3).

Then, in the auto-negotiation compatible unit 4, the auto-negotiation is not established, and thus the communication with the network equipment 1 cannot be established. Therefore, the network equipment 1 executes the auto-negotiation with the auto-negotiation compatible unit 4 after the elapse of a predetermined time (Step S5 above). Then, because the auto-negotiation is established with the auto-negotiation compatible unit 4, the communication is established under the condition agreed between the equipments ((b) of FIG. 3).

In this way, the network equipment 1 can communicate with the auto-negotiation compatible unit 4.

### (Example 2)

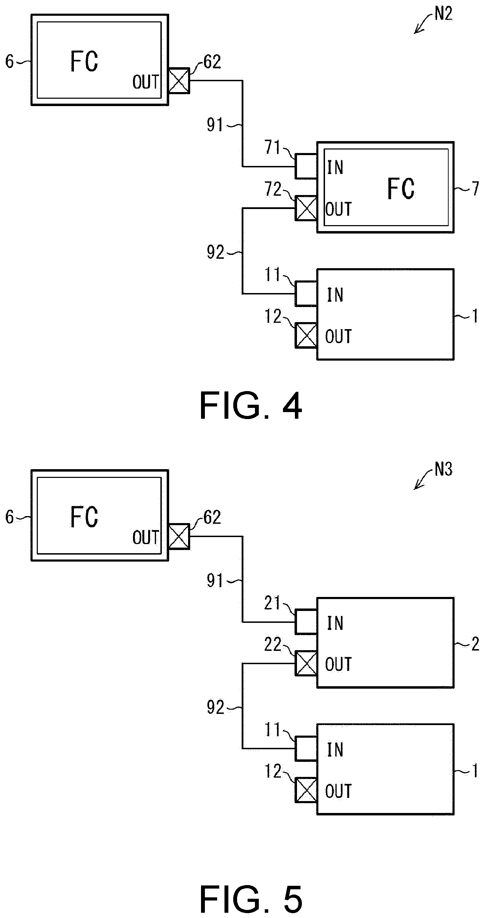

FIG. 4 is a diagram for describing the operation of the network equipment 1 in Example 2. Example 2 is a case that a fast connect unit 8 which is a slave equipment is replaced with the network equipment 1 of the present invention in a network system N8 of the prior art shown in (b) of FIG. 7.

In the fast connect unit, the port type of the IN-side communication portion 71 is uniquely decided to be MDI, and the port type of the OUT-side communication portion is uniquely decided to be MDI-X. Similarly, in the network equipment 1, the port type of the IN-side communication portion 71 is also decided to be MDI and the port type of the OUT-side communication portion is also decided to be MDI-X under the specified condition.

The IN-side communication portion 11 of the network equipment 1 is connected to the OUT-side communication portion 72 of the fast connect unit 7 through the communication cable 92 by the user. Then, first, the network equipment 1 attempts the communication with the fast connect unit 7 by using the decided predetermined communication parameter (Step S2 above). Because the fast connect unit 7 is also a network equipment that communicates in a decided predetermined communication parameter fixation, the communication is established immediately. The network system in which the fast connect unit 8 is replaced with the network equipment 1 from the network system N8 and the communication can be performed is referred to as a network system N2.

In this way, the network equipment 1 can communicate with the fast connect unit 7. Moreover, the communication with the fast connect unit is established quickly.

### (Example 3)

FIG. 5 is a diagram for describing the operation of the network equipment 1 in Example 3. In the network system N3 shown in FIG. 5, the master device is a fast connect unit 6. An OUT-side communication portion 62 of the fast connect unit 6 and an IN-side communication portion 21 of a network equipment 2 which is a slave device are connected by a communication cable 91. An OUT-side communication portion 42 of the network equipment 2 and the IN-side communication portion 11 of the network equipment 1 which is a slave device are connected by the communication cable 92. In this example, the communication cable is not connected to the OUT-side communication portion 12 of the network equipment 1. Here, similar to the network equipment 1, the network equipment 2 is also the network equipment according to Embodiment 1.

The connection between the fast connect unit 6 and the network equipment 2 is the same as in Example 2. That is, the communication is immediately established by using the decided predetermined communication parameter.

Next, the connection between the network equipment 2 and the network equipment 1 is as follows. First, both the network equipment 2 and the network equipment 1 attempt the communication by using the decided predetermined communication parameter (Step S2 above). Therefore, the communication is established by using the predetermined communication parameter.

In this way, the communication can be performed between the network equipments 1 and 2 according to Embodiment 1. Moreover, the communication is quickly established without execution of the auto-negotiation.

### (Example 4)

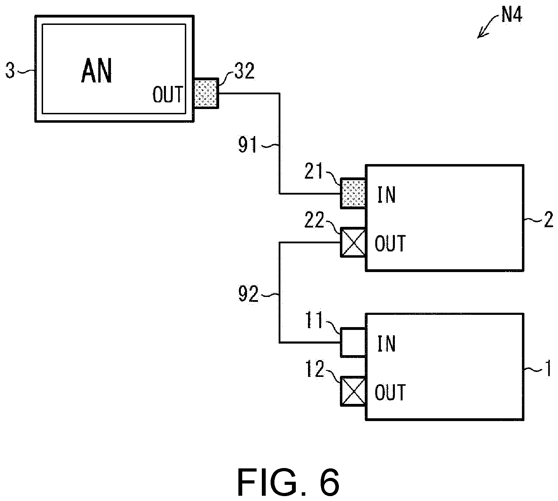

FIG. 6 is a diagram for describing the operation of the network equipment 1 in Example 4. In a network system N4 shown in FIG. 6, the master device is an auto-negotiation compatible unit 3. An OUT-side communication portion 32 of the auto-negotiation compatible unit 3 and the IN-side communication portion 21 of the network equipment 2 which is a slave device are connected by the communication cable 91. The OUT-side communication portion 22 of the network equipment 2 and the IN-side communication portion 11 of the network equipment 1 which is a slave device are connected by the communication cable 92. In this example, the communication cable is not connected to the OUT-side communication portion 52 of the network equipment 1.

The connection between the auto-negotiation compatible unit 3 and the network equipment 2 is the same as in Example 1. That is, the communication is established by the auto-negotiation between the two equipments. The connection between the network equipment 2 and the network equipment 1 is the same as in the Example 3. That is, the communication is immediately established by using the decided predetermined communication parameter.

In the network equipment 2, regarding the IN-side communication portion 21, the communication is established by the auto-negotiation, and regarding the OUT-side communication portion 22, the communication is immediately established by using the decided predetermined communication parameter. In this way, in the network equipment 2 according to Embodiment 1, for both the IN-side communication portion 21 and the OUT-side communication portion 22, the communication can be established according to the connection partner.

As described above, regarding the network equipment 1 according to Embodiment 1, the communication can be quickly established with an equipment (a fast connect unit) that performs communication by using the decided predetermined communication parameter only. In addition, the communication can also be established with an equipment (an auto-negotiation compatible unit) that performs negotiation to decide the communication parameter so as to establish communication. Furthermore, the communication can also be quickly established between the network equipments according to Embodiment 1.

Therefore, even if the user does not pay attention to whether the existing equipment in the industrial network system is an equipment that performs communication by using a predetermined communication parameter only or an equipment that performs negotiation to decide the communication parameter so as to establish communication, the network equipment 1 according to Embodiment 1 can be connected, and the convenience for the user is improved. In addition, the user does not need to prepare an apparatus in a different communication type as the network equipment which is also a specific production equipment, and does not need to have excessive apparatus. In addition, because the network equipment 1 according to Embodiment 1 operates in a manner of establishing the communication without performing the negotiation as much as possible, the establishment of the communication at the time of connection is efficient.

In the flow shown in FIG. 2, the operation when the network equipment 1 is connected to the network is described. However, even when other equipment is newly connected to the working network equipment 1, the network equipment 1 operates in the same manner. Therefore, the same effect as described above can be obtained even when other equipment is connected to the network equipment 1. Therefore, the user can connect the apparatus in a different communication type via the network equipment 1 according to Embodiment 1.

However, in a case that the connection cannot be performed when other equipment is newly connected to the working network equipment 1, the connection mode of the network equipment 1 is set to the appropriate specified communication parameter fixation or auto-negotiation fixation, and thereby the connection can be reliably performed.

### [Implementation example by software]

The functional blocks (particularly, the control portion 10) of the network equipment 1 may be implemented by a logic circuit (hardware) formed in an integration circuit (an IC chip) or the like, or may be implemented by software.

In the latter case, the control portion 10 includes a computer that executes a command of a program which is software for implementing each function. The computer includes, for example, one or more processors and a computer-readable recording medium which stores the program. Besides, in the computer, the processor reads the program from the recording medium and executes the program, and thereby the objective of the present invention is achieved.

As the processor described above, for example, a central processing unit (CPU) can be used. As the recording medium described above, a "non-temporary tangible medium", for example, a tape, a disk, a card, a semiconductor memory, a programmable logic circuit, or the like in addition to a read only memory (ROM) or the like can be used. In addition, a random access memory (RAM) or the like which expands the above program may be further included.

In addition, the program described above may be supplied to the computer via an arbitrary transmission medium (a communication network, a broadcast wave, or the like) capable of transmitting the program. It should be noted that an aspect of the present invention can also be implemented in a form of a data signal which is embedded in a carrier wave and in which the above program is embodied by electronic transmission.

In each of the above embodiment and examples, a case that the network equipment of the present invention is a slave device including an IN-side communication portion and an OUT-side communication portion is described as an example. However, the application of the present invention is not limited thereto, and the present invention can also be similarly applied to a slave device which includes an IN-side communication portion and does not include an OUT-side communication portion. In addition, the present invention can also be similarly applied to a master device which includes an IN-side communication portion and an OUT-side communication portion, and a master device which includes an OUT-side communication portion and does not include an IN-side communication portion.

### [Summary]

The network equipment according to an aspect of the present invention is used in a network system in which a master device and slave devices are connected by a cable, and the network equipment includes a communication portion that transmits/receives data to/from other equipment, and a control portion that controls the communication portion. The network equipment has a configuration in which the control portion attempts, when the own equipment is connected to other equipment in the network system, the connection to the other equipment by using a predetermined communication parameter through the communication portion, and in a case that the communication with the other equipment by using the predetermined communication parameter is not established, the control portion executes negotiation for deciding the communication parameter with the other equipment through the communication portion and establishes the communication with the other equipment by using an agreed communication parameter.

According to the above configuration, a network equipment can be realized which can be connected to an equipment that sets the communication parameter by negotiation and to an equipment that performs communication by using a predetermined communication parameter only. Moreover, the communication can be quickly established with an equipment that performs communication by using a predetermined communication parameter only. In addition, the communication can also be quickly established between the network equipments according to an aspect of the present invention.

The network equipment according to the above aspect may have a configuration in which the communication parameter is at least any one of a port type, a communication speed, and a full-duplex/half-duplex type.

According to the above configuration, the above communication parameter can be specifically configured.

The network equipment according to the above aspect may have a configuration in which an operation mode when the network equipment is connected to other equipment in the network system is configured to be capable of being further switched to a first connection mode, and in a case that the operation mode is set to the first connection mode, the control portion attempts, when the own equipment is connected to other equipment in the network system, the connection to the other equipment by using the predetermined communication parameter through the communication portion.

According to the above configuration, by using only a part of the functions of the network equipment of the present invention, the operation when the network equipment is connected to the network system can be made to be the same as that of the equipment of the prior art (for example, a fast connect unit) according to the user's choice.

The network equipment according to the above aspect may have a configuration in which the operation mode when the network equipment is connected to other equipment in the network system is configured to be capable of being further switched to a second connection mode, and in a case that the operation mode is set to the second connection mode, the control portion executes, when the own equipment is connected to other equipment in the network system, negotiation for deciding a communication parameter with the other equipment through the communication portion and attempts to establish the communication with the other equipment by using an agreed communication parameter.

According to the above configuration, by using only a part of the functions of the network equipment of the present invention, the operation when the network equipment is connected to the network system can be made to be the same as that of the equipment of the prior art (for example, an auto-negotiation compatible unit) according to the user's choice.

The network equipment according to the above one aspect may be a slave device, and may include a first communication portion for connecting to other equipment on a master device side, and a second communication portion for connecting to other equipment on an opposite side of the master device.

According to the above configuration, the network equipment according to an aspect of the present invention described above can be specifically configured as a slave equipment.

The present invention is not limited to each of the above-described embodiment and examples, various modifications can be made within a scope indicated in the claims, and embodiments obtained by appropriately combining the technical approaches respectively disclosed in the different embodiment and examples are also included in the technical scope of the present invention.

### [Reference Signs List]

- 1, 2: network equipment
- 3, 4, 5: auto-negotiation compatible unit
- 6, 7, 8: fast connect unit
- 10: control portion
- 11, 21, 41, 51, 71, 81: IN-side communication portion
- 12, 22, 32, 42, 52, 62, 72, 82: OUT-side communication portion
- 13: switching portion
- 91, 92: communication cable
- N1, N2, N3, N4, N7, N8: network system

## Claims

1. A network equipment, which is used in a network system in which a master device and slave devices are connected by a cable, comprising:
a communication portion that sends/receives data to/from other equipment, and
a control portion that controls the communication portion, wherein
the control portion attempts, when the own equipment is connected to other equipment in the network system,
connection to the other equipment by using a predetermined communication parameter through the communication portion, and
in a case that the communication with the other equipment by using the predetermined communication parameter is not established, the control portion executes negotiation for deciding the communication parameter with the other equipment through the communication portion and establishes the communication with the other equipment by using an agreed communication parameter.

2. The network equipment according to claim 1, wherein the communication parameter is at least any one of a port type, a communication speed, and a full-duplex/half-duplex type.

3. The network equipment according to claim 1 or 2, wherein an operation mode when the network equipment is connected to other equipment in the network system is configured to be capable of being further switched to a first connection mode, and
in a case that the operation mode is set to the first connection mode,
the control portion attempts, when the own equipment is connected to other equipment in the network system,
connection to the other equipment by using the predetermined communication parameter through the communication portion.

4. The network equipment according to any one of claims 1 to 3, wherein the operation mode when the network equipment is connected to other equipment in the network system is configured to be capable of being further switched to a second connection mode, and
in a case that the operation mode is set to the second connection mode,
the control portion executes, when the own equipment is connected to other equipment in the network system,
negotiation for deciding a communication parameter with the other equipment through the communication portion and attempts to establish the communication with the other equipment by using an agreed communication parameter.

5. The network equipment according to any one of claims 1 to 4,
which is a slave device and comprises
a first communication portion for connecting to other equipment on a master device side and a second communication portion for connecting to other equipment on an opposite side of the master device.
